# EUROPEAN PATENT SPECIFICATION

(11) **EP 1 415 903 B1**
(45) Date of publication and mention of the grant of the patent: **28.12.2005**
(21) Application number: 03425681.8
(22) Date of filing: 21.10.2003
(51) Int. Cl.: B62M 11/14

(54) **Device for transmitting motion for cycles**
Vorrichtung zur Bewegungsübertragung bei Fahrrädern
Dispositif de transmission de mouvement pour bicyclette

(30) Priority: 29.10.2002 IT rn20020048
(43) Date of publication of application: 06.05.2004
(73) Proprietor: Momec S.r.l., 47014 Meldola (FC) (IT)
(72) Inventor: Onofri, Ivan, 47034 Forlimpopoli (Forli Cesena) (IT)
(74) Representative: Luppi, Luigi

(56) References cited:
- DE-C- 419 414
- FR-A- 2 763 557
- FR-A- 2 805 516
- US-A- 5 154 676
- US-A1- 2001 041 641

## Description

The present invention relates to a device for transmitting motion for cycles, in particular for bicycles.

As is well known, current systems for transmitting motion from the pedals to the driving wheel of a bicycle comprise one or more crown gears keyed on the axis of rotation of the pedals, connected, by means of a chain, to one or more sprockets keyed on the hub of the rear wheel. Two derailers, one associated to the crown gear assembly and the other one associated with the sprocket assembly, commanded by appropriate levers at the handlebars, allow the chain to enmesh the desired sprocket-crown gear pair, to obtain the transmission ratio between pedals and driving wheel that best suits the conditions of travel. The number of transmission ratios achievable is equal to the product between the number of sprockets and the number of crown gears.

The selected sprocket and crown gear are almost never coplanar and therefore the chain, during the enmeshing operation, undergoes such deformations as to cause a dissipation of energy which otherwise could be used to make the bicycle advance with better efficiency.

It may also occur that a jamming of the chain during the gear shift causes the chain itself to fall off the sprocket or crown gear assembly, causing the locking of the transmission system. This takes place more frequently during marked slope changes, where the transmission ratio requires wide and sudden variations. Lastly, the ratios which can be achieved are limited by the dimensional ratio between sprocket and crown gear which must remain within specific limits for the correct operation of the chain.

Furthermore, are known transmission devices placed inside the hub of the rear wheel, and therefore small and difficult to construct, provided with one or more sprockets, which receive the motion from the chain wound on the front crown gear, and allow to modify the transmission ratio by changing the gears enmeshed within the hub.

In US-5 154 676 is disclosed a power driving device for a bicycle according to the preamble of claim 1 which has a planetary gear assembly at the pedal position of the bicycle. The planetary gear assembly is composed of a carrier in a disc shape which is fixed with a driving axle shaft coupled to driving arms for the bicycle pedals, a plurality of planetary pinion gears rotatably carried on the carrier, a ring gear formed with a part of a housing which is fixed externally to a part of the bicycle frame, and a sun gear rotatably mounted on the driving axle shaft at the centre of the assembly.

Therefore, in US-5 154 67 the planetary gear assembly is contained in a housing which on a side of the frame and which is relatively bulky because is also near to the pedal of the bicycle.

The present invention intends to solve the problems encountered in the prior art, proposing a device for transmitting motion for cycles which is free from the drawbacks described above and which can be used instead of known devices or in addition thereto.

In particular, an object of the present invention is to provide a device for transmitting motion for cycles which allows to obtain, if desired, a very high ratio with no need to use excessively large and bulky crown gears combined with sprockets with few teeth.

These objects and others besides, which shall become more readily apparent from the description that follows, are substantially achieved by a device for transmitting motion for cycles as described and claimed herein.

Further characteristics and advantages shall become more readily apparent from the detailed description of a preferred, but not exclusive, embodiment of a device for transmitting motion for cycles, in accordance with the present invention. Said description shall be provided hereafter with reference to the accompanying figures, provided purely by way of non limiting indication, in which:
- Figure 1 shows a first schematic operative configuration of the device according to the invention, with some parts removed the better to highlight others;
- Figure 2 shows a second operative configuration of the device of Figure 2;
- Figure 3a is a front view of a first detail of an embodiment of the device of the invention;
- Figure 3b is a plan view of the first detail of Figure 3a;
- Figure 4a is a front and sectioned view of a second detail of an embodiment of the device of the invention;
- Figure 4b is a plan, partially sectioned view of the second detail of Figure 4a;
- Figure 5a is a front view of a third detail of an embodiment of the device of the invention;
- Figure 5b is a plan view of the third detail of Figure 5a;
- Figure 6 is a global sectioned view of the device of Figures 3a to 5b.

With reference to the accompanying drawings, the number 1 globally designates a device for transmitting motion for cycles, preferably for bicycles, according to the present invention.

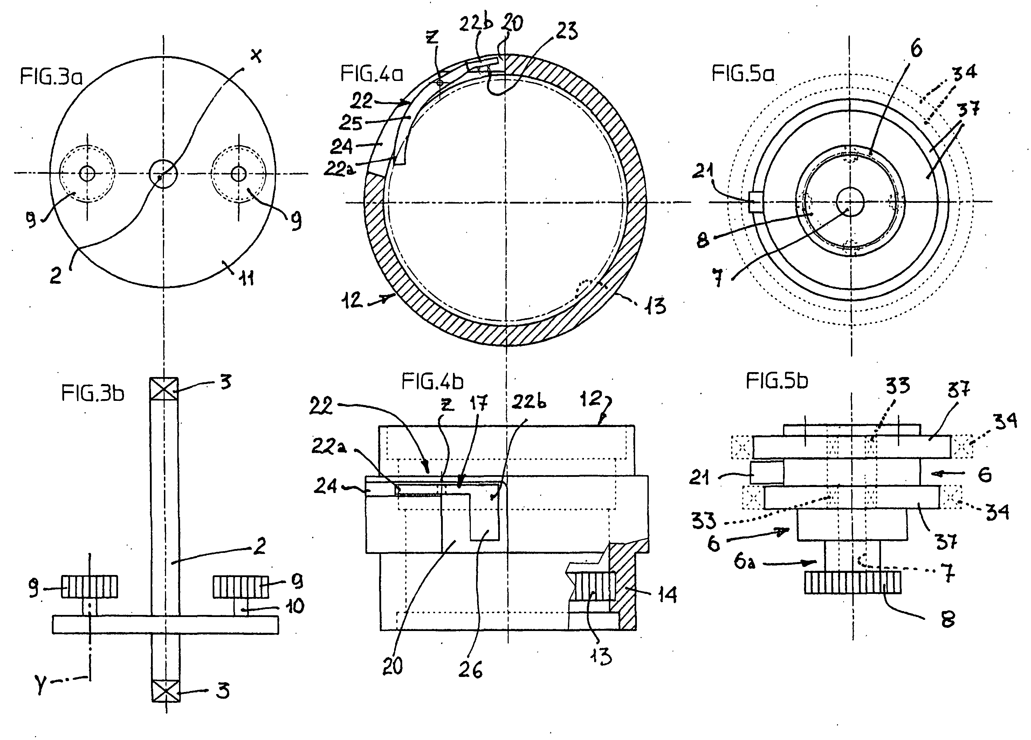

The device 1 comprises a transmission shaft 2 developing along a predetermined axis X and secured in correspondence to each of its own ends 3 to a pedal crank, known in itself and therefore not shown herein (Figure 3b). The device 1 further comprises at least a one crown gear 30 of the known kind (but preferably a plurality of crown gears), capable of being coupled by means of a known transmission organ, typically a chain 31 with articulated links, to one or more sprockets associated to the hub of a wheel of the cycle.

In the preferred embodiment and application of the device of the invention, the cycle is a bicycle provided with a plurality of crown gears mounted in correspondence with the central movement and with a plurality of sprockets keyed onto the hub of the rear wheel. In any case, to simplify the description that follows, hereinafter reference shall be made to a single sprocket and to a single crown gear.

Advantageously, the device 1 further comprises an epicycloidal wheel mechanism 5, operatively interposed between the transmission shaft 2 and the crown gear 30, to obtain a predefined transmission ratio between the number of revolutions in the unit of time completed by the pedals and the number of revolutions in the unit of time completed by the crown gear.

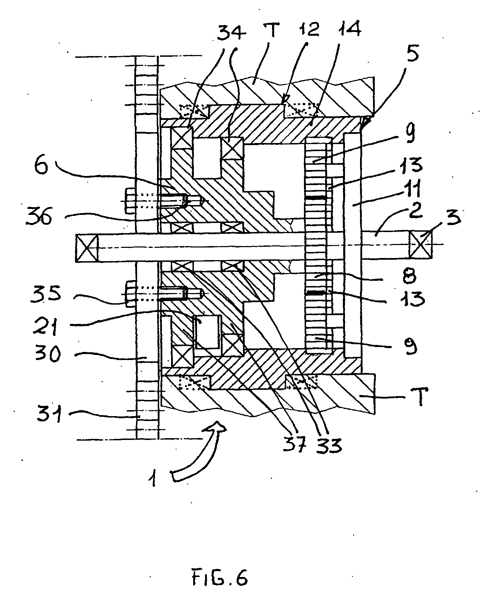

Preferably, with reference to Figures 5a and 5b, the epicycloidal wheel mechanism 5 comprises a central shaft 6 provided with a through axial cavity 7 in which the transmission shaft 2 is coupled in rotary and coaxial fashion, for instance with the aid of bearings 33, preferably paired.

The central shaft 6 is attached to the crown 30, for instance by means of simple bolts 35 engaging corresponding threaded holes 36. The central shaft 36 also has a gear wheel 8 which develops about the axial cavity 7, preferably at an end 6a of the shaft 6 itself. At least one planetary gear wheel 9, able to rotate about its own axis Y attached to the transmission shaft 2 and distanced therefrom, is enmeshed on the gear wheel 8.

In particular, as shown in Figures 3a and 3b, the gear mechanism 5 comprises two planetary gear wheels 9 mounted in rotary fashion on respective shafts 10 developing from a flange 11 integral with the shaft 2 and parallel to the predetermined axis X. The two planetary gear wheels 9 are positioned at opposite sides relative to the transmission shaft 2.

Although two planetary gear wheels 9 are shown, their number is not binding.

When the transmission shaft 2 is coupled to the through axial cavity 7 of the central shaft 6, the planetary gear wheels 9 are enmeshed in the gear wheel 8 and the ends 3 of the transmission shaft 2 project from opposite sides to engage the pedal cranks.

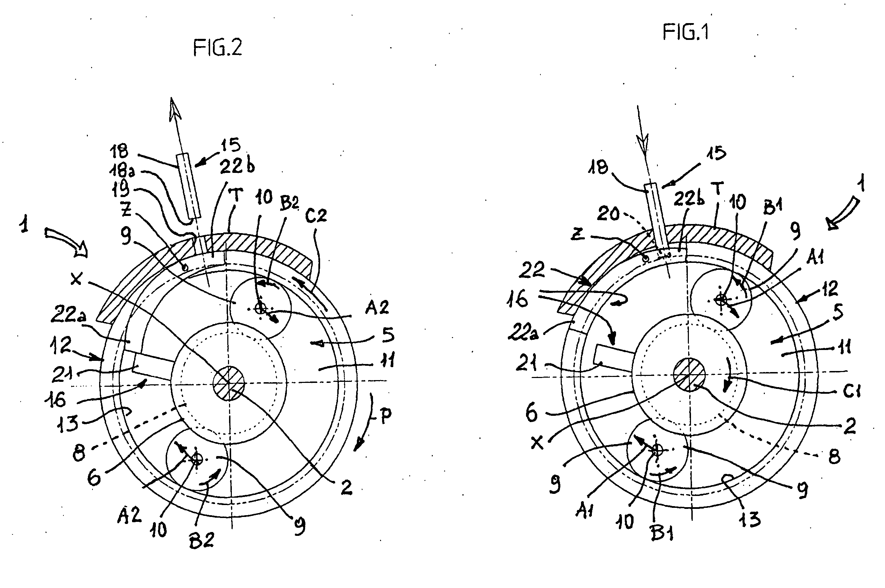

The wheel mechanism 5 lastly comprises an external gear 12 mounted on the frame T of the cycle and having inner teeth 13 enmeshed on the planetary gear wheel 9. In particular, the external gear 12 is defined by a cylindrical body 14 (Figures 4a, 4b and 6), mounted externally and coaxially to the central shaft 6, preferably with the interposition of a pair of bearings 34, mounted on corresponding flanges 37 integral with the same central shaft 6. The gear 12 also has, in correspondence with an inner annular portion, the teeth 13 enmeshed on the planetary gear wheel 9 (Figures 1, 2 and 6).

In an embodiment not illustrated herein, the external gear 12 is attached to the frame T of the cycle.

In the illustrated embodiment, instead, the external gear 12 can also be mounted in rotary fashion on the frame of the cycle, for instance by means of bearings, and the device 1 further comprises removable locking means 15, to lock the external gear 12 itself on the frame T and prevent its relative rotation.

The device 1 lastly comprises means 16 for making the pedal cranks attached to the crown, according to an operating principle described below. Said means 16 are defined by a device 17 for stopping the central shaft 6 on the external gear 12 which is commanded by the same locking means 15.

In detail, the means 15 for locking the external gear 12 on the frame T of the cycle comprise a pivot 18 engaged in sliding fashion in a first seat 19 obtained on the frame T and, preferably, oriented radially relative to the predetermined axis X of the transmission shaft 2.

The pivot 18 is movable between an engagement position in a second seat 20 obtained on the cylindrical body 14 of the external gear 12 and a position of disengagement from the second seat 20. In the engagement position, the pivot 18 locks the external gear 12 on the frame T whilst, in the disengagement position the external gear 12 is free to rotate relative to the frame T. The pivot 18 can be commanded by appropriate means located in a convenient location for the user, for instance a lever at the handlebar, or simply extracted by hand from its seats 19, 20.

The device 17 for stopping the central shaft 6 on the external gear 12 comprises an abutment element 21, integral with the central shaft 6 and extending radially from said central shaft 6, and a lever 22 pivotally engaged in Z on the external gear 12 and having a first end 22a for engagement with the abutment element 21 and a second end 22 for engagement with the pivot 18.

The lever 22 is movable between an active position (Figure 2), in which the first end 22a lies in radial approach to the central shaft 6, to intercept the abutment element 21, and a resting position (Figure 1), in which the first end 22a is radially distanced from the abutment element 21.

The pivot 18, in the position of engagement in the second seat 20, abuts against the second end 22b of the lever 22 (Figure 1), to keep the lever in the resting position, in contrast with elastic means 23 interposed between the second end 22b of the lever 22 and the external gear 12.

The elastic means 23, visible in Figure 4a in the form of a helical spring, keep the lever 22 in the active position when the pivot 18 is in its disengaged position.

In the preferred embodiment illustrated in Figures 4a and 4b, the lever 22 is mounted in a compartment 24 of the cylindrical body 14 and is pivotally engaged about an axis Z parallel to the axis X of the transmission shaft 2. The compartment 24 is at least partially open inwards, to allow the first end 22a radially to approach the central shaft 6.

The lever 22 also has a circular arc portion 25 which bears the first engagement end 22a. The medium radius of the circular arc portion 25 is equal to the medium radius of the cylindrical body 14, so that in the resting position the lever 22 follows the profile of the cylindrical body itself 14 and, in the active position, the first engagement end 22a projects as far as possible from the compartment 24 towards the abutment element 21.

The second end 22b of the lever 22, positioned at the opposite side from the first end 22a relative to the fulcrum axis Z, preferably has a flat expansion 26, which superiorly abuts against the helical spring 23 and which is introduced in the seat 20 within which is positioned the end 18a of the pivot 18.

The operation of the device of the invention is detailed below.

With reference to Figure 1, the pivot 18 in the engagement position in the second seat 20 locks the external gear 12 on the frame T. Moreover, the pivot 18 abuts against the second end 22b of the lever 22, in contrast with the spring 23, and it maintains the first end 22a radially distanced from the abutment element 21.

The user who acts on the pedal cranks causes the rotation of the transmission shaft 2 and of the shafts 10 of the planetary gear wheels 9, according to the arrows A1 of Figure 1.

Each of the planetary gears 9 which enmeshes on the external gear 12 is forced to rotate about its own shaft 10 according to the direction indicated with the arrow B1 of Figure 1 and sets in rotation the central shaft 6 in the opposite direction C1. The direction of rotation C1 of the central shaft 6 and of the crown that is integral therewith coincides with that of the pedal cranks.

The transmission ratio between the pedal cranks and the crown gear 30, i.e. the ratio between the number of revolutions in the unit of time completed by the pedal cranks and the number of revolutions in the unit of time completed by the crown gear 30, is equal to the ratio between the number of teeth of the gear wheel 8 of the central shaft 6 and the sum of the number of teeth of the gear wheel 8 of the central shaft 6 and number of teeth of the external gear 12 (from the known Willis formula on epicycloidal wheel mechanisms).

This transmission ratio multiplied times the final ratio between crown 30 and sprocket generates the total transmission ratio between the number of revolutions of the pedal cranks and that of the rear wheel.

The principle of operation described above also applies to the embodiment not shown herein, in which the external gear is mounted integral with the frame T.

With reference to the illustrated embodiment, when the pivot 18 is brought to the disengagement position, the subject device is disengaged. The external gear 12 is free to rotate relative to the frame T and the lever 22, thrust by the spring 23, rotates about its own pivot point, bring its own first end 22a in radial approach to the central shaft 6 (Figs. 2 and 4a).

The force applied on the pedal cranks determines the rotation of the transmission shaft 2 and of the shafts 10 of the planetary gear wheels 9, according to the arrows A2 of Figure 2.

Each of the satellites 9 which enmeshes on the external gear 12 is forced to rotate about its own shaft 10 according to the direction indicated by the arrow B2 of Figure 2. Since the external gear 12 is free to rotate, however, the planetary gear 9 meet less resistance on the inner teeth 13 than on the gear wheel 8 of the central shaft 6 which is connected to the crown and opposes the resistance of the rear wheel. The planetary gear wheels 9 therefore set in rotation the external gear 12 in the direction C2 opposite to the direction of rotation B2 of each of the satellites 9 relative to its own shaft 10, bringing the first end 22a of the lever 22 to interfere with the abutment element 21 integral with the central shaft 6.

At this point, the external gear 12, the central shaft 6, the crown gear, the planetary gear wheels 9, the transmission shaft 2 and the pedal cranks rotate integrally in the direction indicated by the arrow P and the total transmission ratio is the one generated by crown gear and sprocket.

The device of the present invention achieves the following advantages.

Used instead of a known transmission system, the device of the invention prevents, while shifting gears, the displacement of the transmission chain and the possible jams thereof. The same takes place when the device is used in combination with the usual transmission systems with multiple crown gears and sprockets: if the device 1 is used, engaging it, instead of the usual intervention on the gear levers, since the transmission ratio is to be varied abruptly, the chain is not derailed from the crown gear and from the sprocket whereon it is engaged, but remains thereon.

Moreover, since the mechanism is enclosed within the cylindrical body that bears the internal teeth, it is more rugged and reliable than a derailing system.

Lastly, the present device, also in the embodiment not shown herein in which the external gear is attached to the frame, used in combination with a known transmission device, for instance on road racing bicycles, allows to mount very high ratios without the need to use large and bulky crown gears combined with sprockets having few teeth, with which the chain may have problems enmeshing and operating correctly.

Lastly, tests conducted by the Applicant have shown that, for the same final ratio between the number of revolutions of the pedals and of the driving rear wheel, when the device 1 is applied and operating, the effort expended by the user appears to be less intense.

## Claims

1. A device for transmitting motion for cycles, comprising: a frame (T) of the cycle, a transmission shaft (2) fastened with each of its own ends (3) to a pedal crank; at least one crown gear (30) capable of being coupled by means of a transmission organ (31) to at least one sprocket associated to a wheel of the cycle; an epicycloidal wheel mechanism (5) operatively interposed between the transmission shaft (2) and said at least one crown gear (30), to obtain a predefined transmission ratio between the number of revolutions completed by the pedals and the number of revolutions completed by the crown gear (30) **characterised in that** the epicycloidal wheel mechanism (5) of the device (1) is contained within the bottom bracket of the frame (T).

2. A device as claimed in claim 1, **characterised in that** the epicycloidal wheel mechanism (5) comprises a central shaft (6) attached with said at least one crown (30) and provided with a gear wheel (8), said central shaft (6) having a through cavity (7) for the rotary and coaxial coupling with the transmission shaft (2); at least one planetary gear wheel (9) enmeshed on the gear wheel (8) of the central shaft (2) and able to rotate about its own axis (Y) attached with the transmission shaft (2) and distanced from said transmission shaft (2); an external gear (12) mounted on the bottom bracket of the frame (T) of the cycle and having internal teeth (13) enmeshed on the planetary gear wheel (9).

3. A device as claimed in claim 2, **characterised in that** the external gear (12) is attached to the bottom bracket of the frame (T) of the cycle.

4. A device as claimed in claim 2, **characterised in that** the external gear (12) is rotatably mounted on the bottom bracket of the frame (T) of the cycle

5. A device as claimed in claim 4, **characterised in that** it further comprises means (16) for making the pedal cranks attached to said at least one crown gear.

6. A device as claimed in claim 5, **characterised in that** the means (16) for making the pedal cranks attached to said at least one crown gear comprise a device (17) for stopping the central shaft (6) on the external gear (12).

7. A device as claimed in claim 6, **characterised in that** the device (17) for stopping the central shaft (6) on the external gear (12) is commanded by the means (15) for locking the external gear (12) on the bottom bracket of the frame (T) of the cycle.

8. A device as claimed in claim 7, **characterised in that** the means (15) for locking the external gear (12) on the bottom bracket of the frame (T) of the cycle comprise a pivot (18) engaged in sliding fashion in a first seat (19) obtained on the frame (T); said pivot (18) being movable between a position of engagement in a second seat (20) obtained on the external gear (12), to lock said external gear (12) on the bottom bracket of the frame (T) of the cycle, and a position of disengagement from said second seat (20), in which said external gear (12) is free to rotate relative to the frame (T).

9. A device as claimed in claim 8, **characterised in that** the device (17) for stopping the central shaft (6) on the external gear (12) comprises: an abutment element (21) integral with the central shaft (6) and extending radially from said central shaft (6); a lever (22) pivotally engaged on the external gear (12) and having a first end (22a) for engaging with the abutment element (21) and a second end (22b) for engaging with the pivot (18); said lever (22) being movable between an active position in which the first end (22a) lies in radial approach to the central shaft (6), to intercept the abutment element (21), and a resting position, in which the first end (22a) is radially distanced from the abutment element (21).

10. A device as claimed in claim 9, **characterised in that** the pivot (18) in the engagement position in the second seat (20) abuts against the second end (22b) of the lever (22) pivotally engaged on the external gear (12), to keep said lever (22) in the resting position.

11. A device as claimed in claim 9, **characterised in that** it further comprises elastic means (23) interposed between the second end (22b) of the lever (22) and the external gear (12) to keep the lever (22) in the active position when the pivot (18) is in the disengagement position.

12. A device as claimed in claim 2 or 3, **characterised in that** it comprises two planetary gear wheels (9) positioned at opposite sides relative to the transmission shaft (2).

13. A device as claimed in claim 12, **characterised in that** the transmission shaft (2) has a flange (11) whereon are fastened in rotary fashion the two planetary gear wheels (9).

## Patentansprüche

1. Eine Vorrichtung zum Übertragen einer Bewegung für Räder, mit: einem Rahmen (T) an dem Rad, einer Übertragungswelle (2), die mit jeder ihrer eigenen Enden (3) an einer Pedalkurbel befestigt ist; wobei wenigstens eine Balligverzahnung (30) mit Hilfe eines Übertragungsorgans (31) mit wenigstens einer Kette gekoppelt werden kann, die mit einem Rad des Rades verbunden ist; mit einem Planetenradmechanismus (5), der arbeitsmäßig zwischen der Übertragungswelle (2) und der wenigstens einen Balligverzahnung (30) angeordnet ist, um ein vorbestimmtes Übersetzungsverhältnis zwischen der Anzahl von Umdrehungen, die von den Pedalen gemacht werden, und der Anzahl von Umdrehungen, die von der Balligverzahnung (30) gemacht werden, zu erhalten, **dadurch gekennzeichnet, dass** der Planetenradmechanismus (5) der Vorrichtung (1) innerhalb des Bodenträgers des Rahmens (T) aufgenommen ist.

2. Eine Vorrichtung nach Anspruch 1, **dadurch gekennzeichnet, dass** der Planetenradmechanismus (5) eine mittige Welle (6) aufweist, die an dem wenigstens einen Scheitel (30) befestigt ist und mit einem Zahnrad (8) versehen ist, wobei die mittige Welle (6) wenigstens eine Durchlassöffnung (7) für das drehmäßige und koaxiale Koppeln mit der Übertragungswelle (2) aufweist; wobei wenigstens ein Planetenzahnrad (9) an dem Getriebezahnrad (8) der mittigen Welle (2) angreift und sich um seine eigene Achse (Y) drehen kann, die an der Übertragungswelle (2) befestigt ist und von der Übertragungswelle (2) beabstandet ist; wobei ein externes Zahnrad (12) auf dem Bodenträger (T) des Rahmens des Rades befestigt ist und innere Zähne (13) aufweist, die mit dem Planetenrad (9) kämmen.

3. Eine Vorrichtung nach Anspruch 2, **dadurch gekennzeichnet, dass** das äußere Zahnrad (12) an dem Bodenträger des Rahmens (T) des Rades befestigt ist.

4. Eine Vorrichtung nach Anspruch 2, **dadurch gekennzeichnet, dass** das äußere Zahnrad (12) drehbar an dem Bodenträger des Rahmens (T) des Rades befestigt ist.

5. Eine Vorrichtung nach Anspruch 4, **dadurch gekennzeichnet, dass** sie ferner ein Mittel (16) aufweist, um die Pedalkurbeln an der wenigstens einen Balligverzahnung zu befestigen.

6. Eine Vorrichtung nach Anspruch 5, **dadurch gekennzeichnet, dass** das Mittel (16) zum Befestigen der Pedalkurbeln an der wenigstens einen Balligverzahnung eine Vorrichtung (17) aufweist, um die mittige Welle (6) an dem äußeren Zahnrad (12) anzuhalten.

7. Eine Vorrichtung nach Anspruch 6, **dadurch gekennzeichnet, dass** die Vorrichtung (17) zum Anhalten der mittigen Welle (6) auf dem äußeren Zahnrad (12) durch das Mittel (15) zum Verriegeln des äußeren Zahnrades (12) auf den Bodenträger des Rahmens (T) des Rades gesteuert wird.

8. Eine Vorrichtung nach Anspruch 7, **dadurch gekennzeichnet, dass** das Mittel (15) zum Verriegeln des äußeren Zahnrades (12) auf dem Bodenträger des Rahmens (T) des Rades einen Drehzapfen (18) aufweist, der auf gleitende Weise an einem ersten Sitz (19) angreift, der an dem Rahmen (T) gebildet ist; wobei der Drehzapfen (18) zwischen einer Position des Eingreifens in einen zweiten Sitz (20), der an dem äußeren Zahnrad (12) gebildet ist, an dem Bodenträger des Rahmens (T) des Rades und zwischen einer Position des Lösens von dem zweiten Sitz (20), in dem das äußere Zahnrad (12) in Bezug auf den Rahmen (T) frei drehbar ist, beweglich ist.

9. Eine Vorrichtung nach Anspruch 8, **dadurch gekennzeichnet, dass** die Vorrichtung (17) zum Anhalten der mittigen Welle (6) auf dem äußeren Zahnrad (12) Folgendes aufweist: ein Anlageelement (21), das mit der mittigen Welle (6) einstückig ausgebildet ist und sich radial von der mittigen Welle (6) aus erstreckt; einen Hebel (22), der in das äußere Zahnrad (12) verschwenkbar eingreift und ein erstes Ende (22a) zum Angreifen an dem Anlageelement (21) sowie ein zweites Ende (22b) zum Angreifen an dem Schwenkzapfen (18) aufweist; wobei der Hebel (22) zwischen einer aktiven Position, in der das erste Ende (22a) in einem radialen Ansatz an der mittigen Welle (6) angreift, beweglich ist, um das Anlageelement (21) abzufangen, und einer Ruheposition beweglich ist, in der das erste Ende (22a) von dem Anlageelement (21) radial beabstandet ist.

10. Eine Vorrichtung nach Anspruch 9, **dadurch gekennzeichnet, dass** der Schwenkzapfen (18) in der Eingriffsposition an dem zweiten Sitz (20) an dem zweiten Ende (22b) des Hebels (22) angreift, der verschwenkbar an dem äußeren Zahnrad (12) angreift, um den Hebel (22) in der Ruheposition zu halten.

11. Eine Vorrichtung nach Anspruch 9, **dadurch gekennzeichnet, dass** sie ferner ein elastisches Mittel (23) aufweist, das zwischen dem zweiten Ende (22b) des Hebels (22) und dem äußeren Zahnrad (12) angeordnet ist, um den Hebel (22) in der aktiven Position zu halten, wenn der Schwenkzapfen (18) in der gelösten Position ist.

12. Eine Vorrichtung nach Anspruch 2 oder 3, **dadurch gekennzeichnet, dass** sie zwei Planetenräder (9) aufweist, die an gegenüberliegenden Seiten in Bezug auf die Übertragungswelle (2) angeordnet sind.

13. Eine Vorrichtung nach Anspruch 12, **dadurch gekennzeichnet, dass** die Übertragungswelle (2) einen Flansch (11) aufweist, an dem die beiden Planetenräder (9) drehmäßig befestigt sind.

## Revendications

1. Dispositif de transmission de mouvement pour des cycles, comprenant : un cadre (T) de cycle, un arbre de transmission (2) accouplé par chacune de ses extrémités (3) à une manivelle de pédalier ; au moins une couronne (30) à denture apte à être couplée, au moyen d'un organe de transmission (31) à au moins une roue pignon associée à une roue du cycle ; un mécanisme (5) de roue épicycloïdale interposé opérationnellement entre l'arbre de transmission (2) et ladite au moins une couronne (30) à denture, pour obtenir un rapport de transmission prédéfini entre le nombre de tours réalisés par les pédales et le nombre de tours réalisé par la couronne (30) à denture, ***caractérisé en ce que*** le mécanisme (5) à roue(s) épicycloïdale(s) du dispositif (1) est contenu dans le support inférieur du cadre (T).

2. Dispositif selon la revendication 1, ***caractérisé en ce que*** le mécanisme (5) à roue(s) épicycloïdale(s) comprend un arbre central (6) fixé à ladite au moins une couronne (30) et muni d'une roue d'engrenage (8), ledit arbre central (6) présentant une cavité traversante (7) pour un couplage rotatif et coaxial avec l'arbre de transmission (2) ; au moins une roue (9) à engrenage planétaire en prise sur la roue d'engrenage (8) de l'arbre central (2) et apte à tourner sur son propre axe (Y) fixé à l'arbre de transmission (2) et écarté dudit arbre de transmission (2) ; un engrenage extérieur (12) monté sur le support inférieur du cadre (T) du cycle et ayant une denture interne (13) en prise sur la roue (9) à engrenage planétaire.

3. Dispositif selon la revendication 2, ***caractérisé en ce que*** l'engrenage extérieur (12) est fixé au support inférieur du cadre (T) du cycle.

4. Dispositif selon la revendication 2, ***caractérisé en ce que*** l'engrenage extérieur (12) est monté rotatif sur le support inférieur du cadre (T) du cycle.

5. Dispositif selon la revendication 4, ***caractérisé en ce qu*****'**il comprend en plus des moyens (16) pour assujettir les manivelles du pédalier à ladite au moins une couronne à denture.

6. Dispositif selon la revendication 5, ***caractérisé en ce que*** les moyens (16) pour attacher les manivelles du pédalier à ladite au moins une couronne à denture comprennent un dispositif (17) pour stopper l'arbre central (6) sur l'engrenage extérieur (12).

7. Dispositif selon la revendication 6, ***caractérisé en ce que*** le dispositif (17) pour arrêter l'arbre central (6) sur l'engrenage extérieur (12) est commandé par le moyen (15) pour verrouiller l'engrenage extérieur (12) sur le support inférieur du cadre (T) du cycle.

8. Dispositif selon la revendication 7, ***caractérisé en ce que*** le moyen (15) pour verrouiller l'engrenage extérieur (12) sur le support inférieur du cadre (T) du cycle comprend un pivot (18) engagé de manière coulissante dans un premier siège (19) ménagé sur le cadre (T), ledit pivot (18) étant mobile entre une position d'engagement dans un deuxième siège (20) ménagé sur l'engrenage extérieur (12) pour verrouiller ledit engrenage extérieur (12) sur le support inférieur du cadre (T) du cycle, et une position de dégagement dudit deuxième siège (20), dans laquelle ledit engrenage extérieur (12) est libre de tourner par rapport au cadre (T).

9. Dispositif selon la revendication 8, ***caractérisé en ce que*** le dispositif (17) pour arrêter l'arbre central (6) sur l'engrenage extérieur (12) comprend : un élément d'aboutement (21) solidaire de l'arbre central (6) et s'étendant radialement depuis ledit arbre central (6) ; un levier (22) engagé de manière pivotante sur l'engrenage extérieur (12) et ayant une première extrémité (22a) pour un engagement avec l'élément d'aboutement (21) et une deuxième extrémité (22b) pour un engagement avec le pivot (18) ; ledit levier (22) étant mobile entre une position active dans laquelle la première extrémité (22a) se trouve en approche radiale avec l'arbre central (6) pour intercepter l'élément d'aboutement (21), et une position de repos dans laquelle la première extrémité (22a) est radialement écartée de l'élément d'aboutement (21).

10. Dispositif selon la revendication 9, ***caractérisé en ce que*** le pivot (18), dans la position d'engagement dans le deuxième siège (20), s'aboute contre la deuxième extrémité (22b) du levier (22) engagé de manière pivotante sur l'engrenage extérieur (12) pour maintenir ledit levier (22) dans la position de repos.

11. Dispositif selon la revendication 9, ***caractérisé en ce qu*****'**il comprend en plus des moyens élastiques (23) interposés entre la deuxième extrémité (22b) du levier (22) et l'engrenage extérieur (12) pour maintenir le levier (22) dans la position active lorsque le pivot (18) est dans la position de dégagement.

12. Dispositif selon la revendication 2 ou 3, ***caractérisé en ce qu*****'**il comprend deux roues (9) à engrenage planétaire positionnées sur des côtés opposés par rapport à l'arbre de transmission (2).

13. Dispositif selon la revendication 12, ***caractérisé en ce que*** l'arbre de transmission (2) possède une bride (11) sur laquelle sont fixées de manière rotative les deux roues (9) à engrenage planétaire.
